(19) Europäisches Patentamt / European Patent Office / Office européen des brevets

(11) **EP 4 333 544 B1**

(12) **EUROPEAN PATENT SPECIFICATION**

(45) Date of publication and mention
of the grant of the patent:
**19.11.2025 Bulletin 2025/47**

(21) Application number: **22796211.5**

(22) Date of filing: **29.04.2022**

(51) International Patent Classification (IPC):
*H04W 76/14* (2018.01)   *H04W 76/27* (2018.01)
*H04W 76/50* (2018.01)   *H04W 88/04* (2009.01)
*H04W 92/18* (2009.01)

(52) Cooperative Patent Classification (CPC):
**H04W 76/14; H04W 76/27; H04W 76/50;**
**H04W 88/04; H04W 92/18**

(86) International application number:
**PCT/KR2022/006187**

(87) International publication number:
**WO 2022/231379 (03.11.2022 Gazette 2022/44)**

(54) **OPERATION METHOD OF RELAY UE IN SIDELINK IN WIRELESS COMMUNICATION SYSTEM**

BETRIEBSVERFAHREN FÜR RELAIS-BENUTZERGERÄT IN SIDELINK IN EINEM
DRAHTLOSKOMMUNIKATIONSSYSTEM

PROCÉDÉ DE FONCTIONNEMENT D'UE RELAIS DANS UNE LIAISON LATÉRALE DANS UN
SYSTÈME DE COMMUNICATION SANS FIL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.04.2021  US 202163181987 P**

(43) Date of publication of application:
**06.03.2024 Bulletin 2024/10**

(73) Proprietor: LG Electronics Inc.
**Yeongdeungpo-gu**
**Seoul 07336 (KR)**

(72) Inventors:
• **BACK, Seoyoung**
**Seoul 06772 (KR)**
• **PARK, Giwon**
**Seoul 06772 (KR)**
• **LEE, Seungmin**
**Seoul 06772 (KR)**
• **HONG, Jongwoo**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(56) References cited:
KR-A- 20190 033 846    KR-B1- 102 215 258
US-A1- 2020 059 292    US-A1- 2020 204 967

• **XIAOMI COMMUNICATIONS: "Connection**
**control on L2 relay", vol. RAN WG2, no.**
**Electronic; 20210412 - 20210420, 2 April 2021**
**(2021-04-02), XP052174531, Retrieved from the**
**Internet <URL:https://ftp.3gpp.org/tsg_ran/**
**WG2_RL2/TSGR2_113bis-e/Docs/R2-2102968.zip**
**R2-2102968 Connection control on L2 relay.doc>**
**[retrieved on 20210402]**

- ZTE: "Summary report of [AT113bis-e][603] [Relay] Proposals from summary of agenda item 8.7.4.1 (ZTE)", 3GPP DRAFT; R2-2104405, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210412 - 20210420, 19 April 2021 (2021-04-19), Mobile Competence Centre ; 650, route des Lucioles ; F-06921 Sophia-Antipolis Cedex ; France
, XP051996174

- INTERDIGITAL: "Summary document for AI 8.7.2.1", 3GPP DRAFT; R2-2102091, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic Meeting; 20210125 - 20210205, 10 February 2021 (2021-02-10), Mobile Competence Centre ; 650, route des Lucioles ; F-06921 Sophia-Antipolis Cedex ; France
, XP051977918

Description

## BACKGROUND OF THE PRESENT DISCLOSURE

### Field of the present disclosure

The following description relates to a wireless communication system, and more particularly to methods, apparatuses, processor, and computer program related to an RRC connection request of a relay UE that receives a request from a remote UE in sidelink.

### Discussion of the Related Art

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

A wireless communication system uses various radio access technologies (RATs) such as long term evolution (LTE), LTE-advanced (LTE-A), and wireless fidelity (WiFi). 5th generation (5G) is such a wireless communication system. Three key requirement areas of 5G include (1) enhanced mobile broadband (eMBB), (2) massive machine type communication (mMTC), and (3) ultra-reliable and low latency communications (URLLC). Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is augmented reality (AR) for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup can be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G

Finally, logistics and freight tracking are important use cases for mobile communications that enable the tracking of inventory and packages wherever they are by using location-based information systems. The logistics and freight tracking use cases typically require lower data rates but need wide coverage and reliable location information.

A wireless communication system is a multiple access system that supports communication of multiple users by sharing available system resources (a bandwidth, transmission power, etc.). Examples of multiple access systems include a CDMA system, an FDMA system, a TDMA system, an OFDMA system, an SC-FDMA system, and an MC-FDMA system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

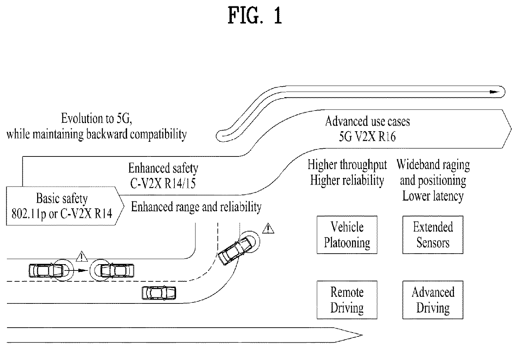

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

Another example can be found in patent document US2020/059292 and in non patent document 3GPP DRAFT; R2-2102968.

## SUMMARY OF THE PRESENT DISCLOSURE

The invention is defined by the appended independent claims and further embodiments are described by the dependent claims.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram comparing vehicle-to-everything (V2X) communication based on pre-new radio access technology (pre-NR) with V2X communication based on NR;
FIG. 2 is a diagram illustrating the structure of a long term evolution (LTE) system according to an embodiment of the present disclosure;
FIG. 3 is a diagram illustrating user-plane and control-plane radio protocol architectures according to an embodiment of the present disclosure;
FIG. 4 is a diagram illustrating the structure of an NR system according to an embodiment of the present disclosure;
FIG. 5 is a diagram illustrating functional split between a next generation radio access network (NG-RAN) and a 5th generation core network (5GC) according to an embodiment of the present disclosure;
FIG. 6 is a diagram illustrating the structure of an NR radio frame to which embodiment(s) of the present disclosure is applicable;
FIG. 7 is a diagram illustrating a slot structure of an NR frame according to an embodiment of the present disclosure;
FIG. 8 is a diagram illustrating radio protocol architectures for sidelink (SL) communication according to an embodiment of the present disclosure;
FIG. 9 is a diagram illustrating radio protocol architectures for SL communication according to an embodiment of the present disclosure;
FIG. 10 illustrates a procedure of V2X or SL communication by a UE depending on a transmission mode according to an embodiment of the disclosure.
FIG. 11 is a diagram of a claimed embodiment.
FIGS. 12 to 18 are diagrams for explaining various apparatuses to which embodiment(s) is applicable.

## DETAILED DESCRIPTION OF THE PRESENT DISCLOSURE

In various embodiments of the present disclosure, "/" and "," should be interpreted as "and/or". For example, "A/B" may mean "A and/or B". Further, "A, B" may mean "A and/or B". Further, "A/B/C" may mean "at least one of A, B and/or C". Further, "A, B, C" may mean "at least one of A, B and/or C".

In various embodiments of the present disclosure, "or" should be interpreted as "and/or". For example, "A or B" may include "only A", "only B", and/or "both A and B". In other words, "or" should be interpreted as "additionally or alternatively".

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA), or the like. IEEE 802.16m is an evolution of IEEE 802.16e, offering backward compatibility with an IRRR 802.16e-based system. UTRA is a part of universal mobile telecommunications system (UMTS). 3rd generation partnership project (3GPP) long term evolution (LTE) is a part of evolved UMTS (E-UMTS) using evolved UTRA (E-UTRA). 3GPP LTE employs OFDMA for downlink (DL) and SC-FDMA for uplink (UL). LTE-advanced (LTE-A) is an evolution of 3GPP LTE.

A successor to LTE-A, $5^{th}$ generation (5G) new radio access technology (NR) is a new clean-state mobile communication system characterized by high performance, low latency, and high availability. 5G NR may use all available spectral resources including a low frequency band below 1GHz, an intermediate frequency band between 1GHz and 10GHz, and a high frequency (millimeter) band of 24GHz or above.

While the following description is given mainly in the context of LTE-A or 5G NR for the clarity of description, the technical idea of an embodiment of the present disclosure is not limited thereto.

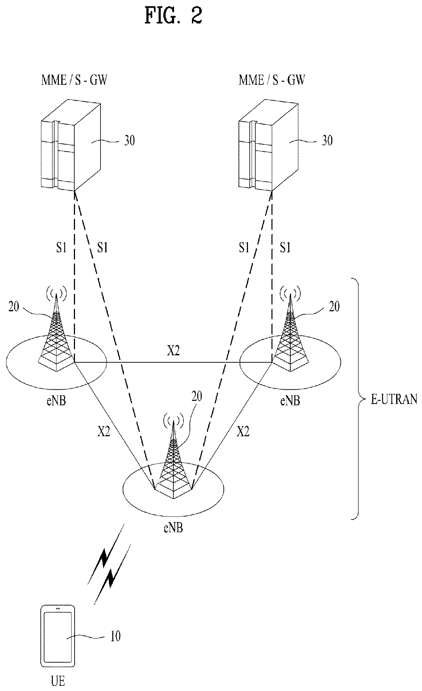

FIG. 2 illustrates the structure of an LTE system according to an embodiment of the present disclosure. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

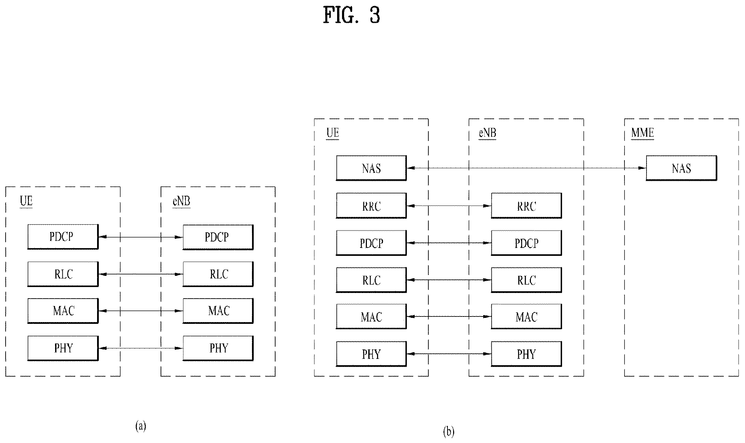

FIG. 3(a) illustrates a user-plane radio protocol architecture according to an embodiment of the disclosure.

FIG. 3(b) illustrates a control-plane radio protocol architecture according to an embodiment of the disclosure. A user plane is a protocol stack for user data transmission, and a control plane is a protocol stack for control signal transmission.

Referring to FIGS. 3(a) and 3(b), the PHY layer provides an information transfer service to its higher layer on physical channels. The PHY layer is connected to the medium access control (MAC) layer through transport channels and data is transferred between the MAC layer and the PHY layer on the transport channels. The transport channels are divided according to features with which data is transmitted via a radio interface.

Data is transmitted on physical channels between different PHY layers, that is, the PHY layers of a transmitter and a receiver. The physical channels may be modulated in orthogonal frequency division multiplexing (OFDM) and use time and frequencies as radio resources.

The MAC layer provides services to a higher layer, radio link control (RLC) on logical channels. The MAC layer provides a function of mapping from a plurality of logical channels to a plurality of transport channels. Further, the MAC layer provides a logical channel multiplexing function by mapping a plurality of logical channels to a single transport channel. A MAC sublayer provides a data transmission service on the logical channels.

The RLC layer performs concatenation, segmentation, and reassembly for RLC serving data units (SDUs). In order to guarantee various quality of service (QoS) requirements of each radio bearer (RB), the RLC layer provides three operation modes, transparent mode (TM), unacknowledged mode (UM), and acknowledged Mode (AM). An AM RLC provides error correction through automatic repeat request (ARQ).

The RRC layer is defined only in the control plane and controls logical channels, transport channels, and physical channels in relation to configuration, reconfiguration, and release of RBs. An RB refers to a logical path provided by L1 (the PHY layer) and L2 (the MAC layer, the RLC layer, and the packet data convergence protocol (PDCP) layer), for data transmission between the UE and the network.

The user-plane functions of the PDCP layer include user data transmission, header compression, and ciphering. The control-plane functions of the PDCP layer include control-plane data transmission and ciphering/integrity protection.

RB establishment amounts to a process of defining radio protocol layers and channel features and configuring specific parameters and operation methods in order to provide a specific service. RBs may be classified into two types, signaling radio bearer (SRB) and data radio bearer (DRB). The SRB is used as a path in which an RRC message is transmitted on the control plane, whereas the DRB is used as a path in which user data is transmitted on the user plane.

Once an RRC connection is established between the RRC layer of the UE and the RRC layer of the E-UTRAN, the UE is placed in RRC_CONNECTED state, and otherwise, the UE is placed in RRC_IDLE state. In NR, RRC_INACTIVE state is additionally defined. A UE in the RRC_INACTIVE state may maintain a connection to a core network, while releasing a connection from an eNB.

DL transport channels carrying data from the network to the UE include a broadcast channel (BCH) on which system information is transmitted and a DL shared channel (DL SCH) on which user traffic or a control message is transmitted. Traffic or a control message of a DL multicast or broadcast service may be transmitted on the DL-SCH or a DL multicast channel (DL MCH). UL transport channels carrying data from the UE to the network include a random access channel (RACH) on which an initial control message is transmitted and an UL shared channel (UL SCH) on which user traffic or a control message is transmitted.

The logical channels which are above and mapped to the transport channels include a broadcast control channel (BCCH), a paging control channel (PCCH), a common control channel (CCCH), a multicast control channel (MCCH), and a multicast traffic channel (MTCH).

A physical channel includes a plurality of OFDM symbol in the time domain by a plurality of subcarriers in the frequency domain. One subframe includes a plurality of OFDM symbols in the time domain. An RB is a resource allocation unit defined by a plurality of OFDM symbols by a plurality of subcarriers. Further, each subframe may use specific subcarriers of specific OFDM symbols (e.g., the first OFDM symbol) in a corresponding subframe for a physical DL control channel (PDCCH), that is, an L1/L2 control channel. A transmission time interval (TTI) is a unit time for subframe transmission.

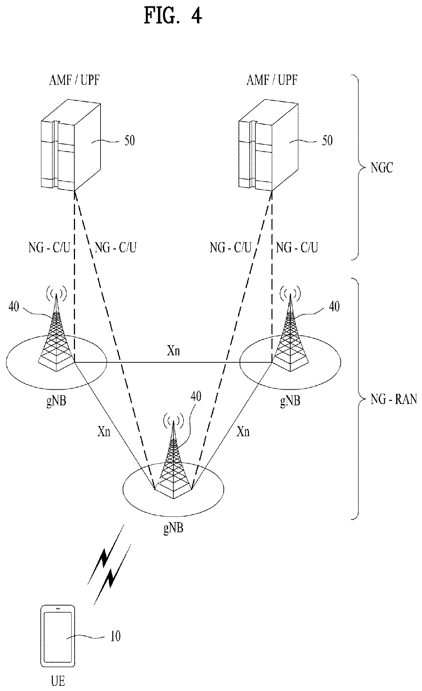

FIG. 4 illustrates the structure of an NR system according to an embodiment of the present disclosure.

Referring to FIG. 4, a next generation radio access network (NG-RAN) may include a next generation Node B (gNB) and/or an eNB, which provides user-plane and control-plane protocol termination to a UE. In FIG. 4, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

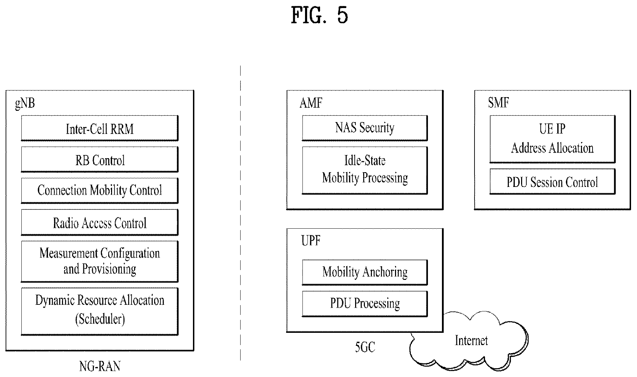

FIG. 5 illustrates functional split between the NG-RAN and the 5GC according to an embodiment of the present disclosure.

Referring to FIG. 5, a gNB may provide functions including inter-cell radio resource management (RRM), radio admission control, measurement configuration and provision, and dynamic resource allocation. The AMF may provide functions such as non-access stratum (NAS) security and idle-state mobility processing. The UPF may provide functions including mobility anchoring and protocol data unit (PDU) processing. A session management function (SMF) may provide functions including UE Internet protocol (IP) address allocation and PDU session control.

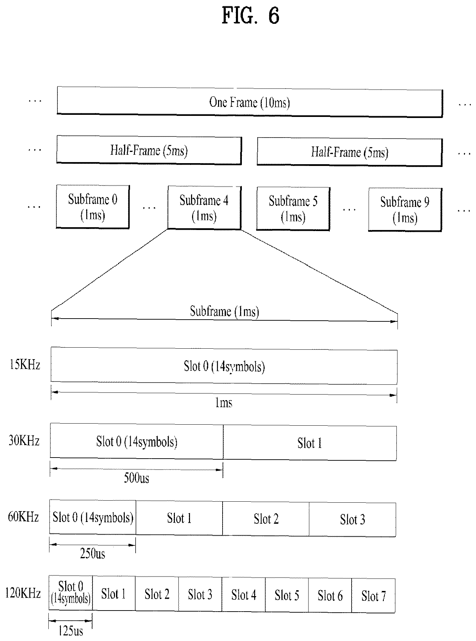

FIG. 6 illustrates a radio frame structure in NR, to which embodiment(s) of the present disclosure is applicable.

Referring to FIG. 6, a radio frame may be used for UL transmission and DL transmission in NR. A radio frame is 10ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource including the same number of symbols (e.g., a subframe, slot, or TTI) (collectively referred to as a time unit (TU) for convenience) may be configured to be different for the aggregated cells.

In NR, various numerologies or SCSs may be supported to support various 5G services. For example, with an SCS of 15kHz, a wide area in traditional cellular bands may be supported, while with an SCS of 30kHz/60kHz, a dense urban area, a lower latency, and a wide carrier bandwidth may be supported. With an SCS of 60kHz or higher, a bandwidth larger than 24.25GHz may be supported to overcome phase noise.

An NR frequency band may be defined by two types of frequency ranges, FR1 and FR2. The numerals in each frequency range may be changed. For example, the two types of frequency ranges may be given in Table 3. In the NR system, FR1 may be a "sub 6GHz range" and FR2 may be an "above 6GHz range" called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerals in a frequency range may be changed in the NR system. For example, FR1 may range from 410MHz to 7125MHz as listed in Table 4. That is, FR1 may include a frequency band of 6GHz (or 5850, 5900, and 5925MHz) or above. For example, the frequency band of 6GHz (or 5850, 5900, and 5925MHz) or above may include an unlicensed band. The unlicensed band may be used for various purposes, for example, vehicle communication (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

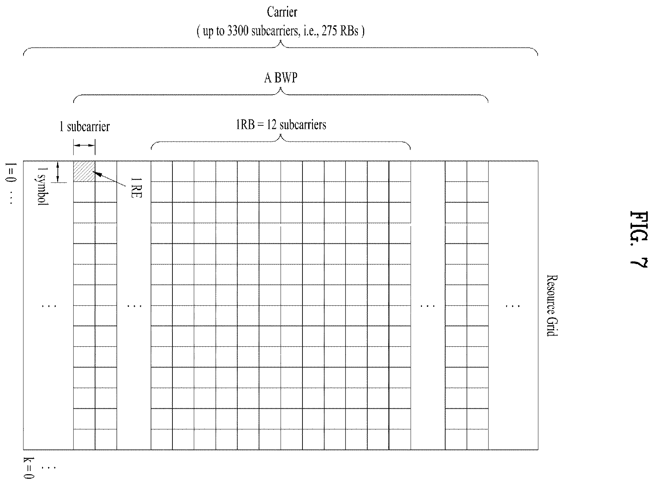

FIG. 7 illustrates a slot structure in an NR frame according to an embodiment of the present disclosure.

Referring to FIG. 7, a slot includes a plurality of symbols in the time domain. For example, one slot may include 14 symbols in an NCP case and 12 symbols in an ECP case. Alternatively, one slot may include 7 symbols in an NCP case and 6 symbols in an ECP case.

A carrier includes a plurality of subcarriers in the frequency domain. An RB may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, or the like). A carrier may include up to N (e.g., 5) BWPs. Data communication may be conducted in an activated BWP. Each element may be referred to as a resource element (RE) in a resource grid, to which one complex symbol may be mapped.

A radio interface between UEs or a radio interface between a UE and a network may include L1, L2, and L3. In various embodiments of the present disclosure, L1 may refer to the PHY layer. For example, L2 may refer to at least one of the MAC layer, the RLC layer, the PDCH layer, or the SDAP layer. For example, L3 may refer to the RRC layer.

Now, a description will be given of sidelink (SL) communication.

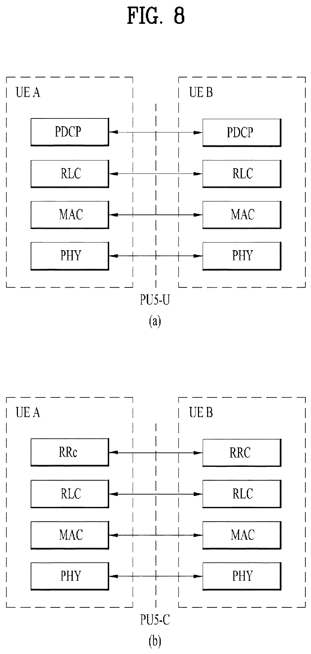

FIG. 8 illustrates a radio protocol architecture for SL communication according to an embodiment of the present disclosure. Specifically, FIG. 8(a) illustrates a user-plane protocol stack in LTE, and FIG. 8(b) illustrates a control-plane protocol stack in LTE.

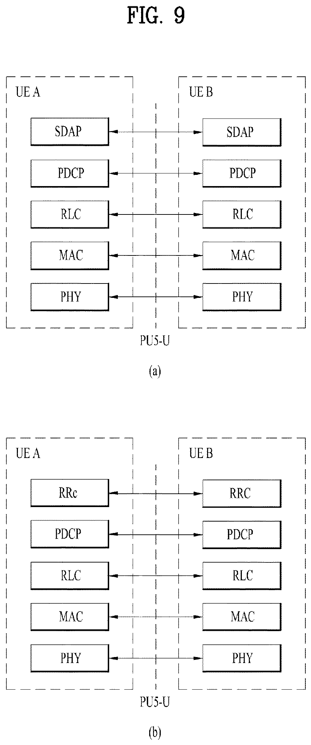

FIG. 9 illustrates a radio protocol architecture for SL communication according to an embodiment of the present disclosure. Specifically, FIG. 9(a) illustrates a user-plane protocol stack in NR, and FIG. 9(b) illustrates a control-plane protocol stack in NR.

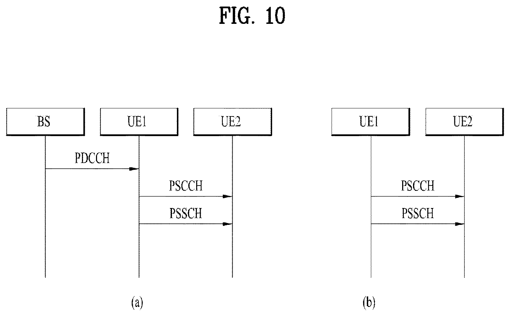

FIG. 10 illustrates a procedure of V2X or SL communication by a UE depending on a transmission mode according to an embodiment of the disclosure. The embodiment of FIG. 10 may be combined with various embodiments of the present disclosure. In various embodiments of the present disclosure, the transmission mode may be referred to as a mode or a resource allocation mode. Hereinafter, for convenience of description, a transmission mode in LTE may be referred to as an LTE transmission mode, and a transmission mode in NR may be referred to as an NR resource allocation mode.

For example, FIG. 10A illustrates an operation of a UE related to an LTE transmission mode 1 or an LTE transmission mode 3. For example, FIG. 10A illustrates an operation of a UE related to an NR resource allocation mode 1. For example, the LTE transmission mode 1 may be applied to general SL communication, and the LTE transmission mode 3 may be applied to V2X communication.

For example, FIG. 10B illustrates an operation of a UE related to the LTE transmission mode 2 or the LTE transmission mode 4. For example, FIG. 10B illustrates an operation of a UE related to the NR resource allocation mode 2.

Referring to FIG. 10A, in the LTE transmission mode 1, the LTE transmission mode 3, or the NR resource allocation mode 1, a BS may schedule an SL resource to be used by a UE for SL transmission. For example, in operation S8000, the BS may transmit information related to an SL resource and/or information related to a UL resource to a first UE. For example, the UL resource may include a PUCCH resource and/or a PUSCH resource. For example, the UL resource may be a resource for reporting SL HARQ feedback to the BS.

For example, the first UE may receive information related to a dynamic grant (DG) resource and/or information related to a configured grant (CG) resource from the BS. For example, the CG resource may include a CG type 1 resource or a CG type 2 resource. In the present specification, the DG resource may be a resource configured/allocated to the first UE through downlink control information (DCI) by the BS. In the present specification, the CG resource may be a (periodic) resource configured/allocated to the first UE through a DCI and/or an RRC message by the BS. For example, in the case of the CG type 1 resource, the BS may transmit the RRC message including the information related to the CG resource to the first UE. For example, in the case of the CG type 2 resource, the BS may transmit the RRC message including the information related to the CG resource to the first UE, and the BS may transmit DCI related to activation or release of the CG resource to the first UE.

In operation S8010, the first UE may transmit a PSCCH (e.g., sidelink control information (SCI) or 1st-stage SCI) to a second UE based on the resource scheduling. In operation S8020, the first UE may transmit a PSSCH (e.g., 2nd-stage SCI, MAC PDU, or data) related to the PSCCH to the second UE. In operation S8030, the first UE may receive a PSFCH related to the PSCCH/PSSCH from the second UE. For example, the HARQ feedback information (e.g., NACK information or ACK information) may be received from the second UE through the PSFCH. In operation S8040, the first UE may transmit/report the HARQ feedback information to the BS through the PUCCH or the PUSCH. For example, the HARQ feedback information reported to the BS may be information generated based on the HARQ feedback information received from the second UE by the first UE. For example, the HARQ feedback information reported to the BS may be information generated based on a preconfigured rule by the first UE. For example, the DCI may be DCI for scheduling of SL. For example, a format of the DCI may be DCI format 3_0 or DCI format 3_1. Table 5 shows an example of DCI for scheduling of SL.

[Table 5]

| |
|---|
| **7.3.1.4.1 Format 3_0**<br>DCI format 3_0 is used for scheduling of NR PSCCH and NR PSSCH in one cell. The following information is transmitted by means of the DCI format 3_0 with CRC scrambled by SL-RNTI or SL-CS-RNTI:<br><br>- Resource pool index - $\lceil \log_2 I \rceil$ bits, where *I* is the number of resource pools for transmission configured by the higher layer parameter *sl-TxPoolScheduling.* |

(continued)

- Time gap - 3 bits determined by higher layer parameter *sl-DCI-ToSL-Trans,* as defined in clause 8.1.2.1 of [6, TS 38.214]

- HARQ process number - 4 bits.

- New data indicator - 1 bit.

- Lowest index of the subchannel allocation to the initial transmission - $\left\lceil \log_2(N^{\text{SL}}_{\text{subChannel}}) \right\rceil$ bits as defined in clause 8.1.2.2 of [6, TS 38.214]

- SCI format 1-A fields according to clause 8.3.1.1:
    - Frequency resource assignment.
    - Time resource assignment.

- PSFCH-to-HARQ feedback timing indicator - $\left\lceil \log_2 N_{\text{fb\_timing}} \right\rceil$ bits, where $N_{\text{fb\_timing}}$ is the number of entries in the higher layer parameter *sl-PSFCH-ToPUCCH,* as defined in clause 16.5 of [5, TS 38.213]

- PUCCH resource indicator - 3 bits as defined in clause 16.5 of [5, TS 38.213].

- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.

- Counter sidelink assignment index - 2 bits
    - 2 bits as defined in clause 16.5.2 of [5, TS 38.213] if the UE is configured with *pdsch-HARQ-ACK-Codebook = dynamic*
    - 2 bits as defined in clause 16.5.1 of [5, TS 38.213] if the UE is configured with *pdsch-HARQ-ACK-Codebook = semi-static*

- Padding bits, if required

If multiple transmit resource pools are provided in *sl-TxPoolScheduling*, zeros shall be appended to the DCI format 3_0 until the payload size is equal to the size of a DCI format 3_0 given by a configuration of the transmit resource pool resulting in the largest number of information bits for DCI format 3_0.

If the UE is configured to monitor DCI format 3_1 and the number of information bits in DCI format 3_0 is less than the payload of DCI format 3_1, zeros shall be appended to DCI format 3_0 until the payload size equals that of DCI format 3_1.

**7.3.1.4.2 Format 3_1**

DCI format 3_1 is used for scheduling of LTE PSCCH and LTE PSSCH in one cell.

The following information is transmitted by means of the DCI format 3_1 with CRC scrambled by SL Semi-Persistent Scheduling V-RNTI:

- Timing offset- 3 bits determined by higher layer parameter *sl-TimeOffsetEUTRA,* as defined in clause 16.6 of [5, TS 38.213]

- Carrier indicator -3 bits as defined in 5.3.3.1.9A of [11, TS 36.212].

- Lowest index of the subchannel allocation to the initial transmission - $\left\lceil \log_2(N^{\text{SL}}_{\text{subchannel}}) \right\rceil$ bits as defined in 5.3.3.1.9A of [11, TS 36.212].

- Frequency resource location of initial transmission and retransmission, as defined in 5.3.3.1.9A of [11, TS 36.212]

- Time gap between initial transmission and retransmission, as defined in 5.3.3.1.9A of [11, TS 36.212]

- SL index - 2 bits as defined in 5.3.3.1.9A of [11, TS 36.212]

- SL SPS configuration index - 3 bits as defined in clause 5.3.3.1.9A of [11, TS 36.212].

- Activation/release indication - 1 bit as defined in clause 5.3.3.1.9A of [11, TS 36.212].

Referring to FIG. 10B, in the LTE transmission mode 2, the LTE transmission mode 4, or the NR resource allocation mode 2, the UE may determine an SL transmission resource in an SL resource configured by a BS/network or a preconfigured SL resource. For example, the configured SL resource or preconfigured SL resource may be a resource pool. For example, the UE may autonomously select and schedule a resource for SL transmission. For example, the UE may autonomously select a resource in the configured resource pool and may perform SL communication. For example, the UE may select a sensing and resource (re)selection procedure and may autonomously select a resource within a selection window. For example, the sensing may be performed in units of subchannels. For example, in operation S8010, the first UE that autonomously selects the resource in the resource pool may transmit a PSCCH (e.g., sidelink control information (SCI) or 1st-stage SCI) to the second UE using the resource. In operation S8020, the first UE may transmit a PSSCH (e.g., 2nd-stage SCI, MAC PDU, or data) related to the PSCCH to the second UE. In operation S8030, the first UE may receive a PSFCH related to the PSCCH/PSSCH from the second UE.

Referring to FIG. 10A or 10B, for example, the first UE may transmit SCI on the PSCCH to the second UE. Alternatively, for example, the first UE may transmit two consecutive SCIs (e.g., 2-stage SCI) on the PSCCH and/or the PSSCH to the second UE. In this case, the second UE may decode two consecutive SCIs (e.g., 2-stage SCI) for receiving the PSSCH from the first UE. In the present specification, the SCI transmitted on the PSCCH may be referred to as a 1st SCI, first SCI, 1st-stage SCI, or 1st-stage SCI format, and the SCI transmitted on the PSSCH may be referred to as a 2nd SCI, second SCI, 2nd-stage SCI, or 2nd-stage SCI format. For example, the 1st-stage SCI format may include SCI format 1-A, and the 2nd-stage SCI format may include SCI format 2-A and/or SCI format 2-B. Table 6 shows an example of the 1st-stage SCI format.

[Table 6]

---

**8.3.1.1 SCI format 1-A**

SCI format 1-A is used for the scheduling of PSSCH and 2nd-stage-SCI on PSSCH

The following information is transmitted by means of the SCI format 1-A:

- Priority - 3 bits as specified in clause 5.4.3.3 of [12, TS 23.287] and clause 5.22.1.3.1 of [8, TS 38.321]. Value '000' of Priority field corresponds to priority value '1', value '001' of Priority field corresponds to priority value '2', and so on.

- Frequency resource assignment - $\left\lceil \log_2\left(\frac{N_{\mathrm{subChannel}}^{\mathrm{SL}}\left(N_{\mathrm{subChannel}}^{\mathrm{SL}}+1\right)}{2}\right)\right\rceil$ bits when the value of the higher layer parameter *sl-MaxNumPerReserve* is configured to 2; otherwise $\left\lceil \log_2\left(\frac{N_{\mathrm{subChannel}}^{\mathrm{SL}}\left(N_{\mathrm{subChannel}}^{\mathrm{SL}}+1\right)\left(2N_{\mathrm{subChannel}}^{\mathrm{SL}}+1\right)}{6}\right)\right\rceil$ bits when the value of the higher layer parameter *sl-MaxNumPerReserve* is configured to 3, as defined in clause 8.1.5 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [6, TS 38.214].

- Resource reservation period - $\left\lceil \log_2 N_{\mathrm{rsv\_period}} \right\rceil$ bits as defined in clause 16.4 of [5, TS 38.213], where $N_{\mathrm{rsv\_period}}$ is the number of entries in the higher layer parameter *sl-ResourceReservePeriodList*, if higher layer parameter *sl-MultiReserveResource* is configured; 0 bit otherwise.

- DMRS pattern - $\left\lceil \log_2 N_{\mathrm{pattern}} \right\rceil$ bits as defined in clause 8.4.1.1.2 of [4, TS 38.211], where $N_{\mathrm{pattern}}$ is the number of DMRS patterns configured by higher layer parameter *sl-PSSCH-DMRS-TimePatternList*.

- 2nd-stage SCI format - 2 bits as defined in Table 8.3.1.1-1.

- Beta_offset indicator - 2 bits as provided by higher layer parameter *sl-BetaOffsets2ndSCI* and Table 8.3.1.1-2.

- Number of DMRS port - 1 bit as defined in Table 8.3.1.1-3.

- Modulation and coding scheme - 5 bits as defined in clause 8.1.3 of [6, TS 38.214].

- Additional MCS table indicator - as defined in clause 8.1.3.1 of [6, TS 38.214]: 1 bit if one MCS table is configured by higher layer parameter *sl-Additional-MCS-Table*; 2 bits if two MCS tables are configured by higher layer parameter *sl- Additional-MCS-Table*; 0 bit otherwise.

- PSFCH overhead indication - 1 bit as defined clause 8.1.3.2 of [6, TS 38.214] if higher layer parameter *sl-PSFCH-Period* = 2 or 4; 0 bit otherwise.

- Reserved - a number of bits as determined by higher layer parameter *sl-NumReservedBits*, with value set to zero.

---

Table 7 shows an example of the 2nd-stage SCI format.

[Table 7]

---

**8.4 Sidelink control information on PSSCH**

SCI carried on PSSCH is a 2nd-stage SCI, which transports sidelink scheduling information.

**8.4.1 2nd-stage SCI formats**

---

(continued)

The fields defined in each of the 2nd-stage SCI formats below are mapped to the information bits $a_0$ to $a_{A-1}$ as follows:

Each field is mapped in the order in which it appears in the description, with the first field mapped to the lowest order information bit $a_0$ and each successive field mapped to higher order information bits. The most significant bit of each field is mapped to the lowest order information bit for that field, e.g. the most significant bit of the first field is mapped to $a_0$.

**8.4.1.1 SCI format 2-A**

SCI format 2-A is used for the decoding of PSSCH. with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits.
- New data indicator - 1 bit.
- Redundancy version - 2 bits as defined in Table 7.3.1.1.1-2.
- Source ID - 8 bits as defined in clause 8.1 of [6, TS 38.214].
- Destination ID - 16 bits as defined in clause 8.1 of [6. TS 38.214].
- HARQ feedback enabled/disabled indicator - 1 bit as defined in clause 16.3 of [5, TS 38.213].
- Cast type indicator - 2 bits as defined in Table 8.4.1.1-1 and in clause 8.1 of [6, TS 38.214].
- CSI request - 1 bit as defined in clause 8.2.1 of [6, TS 38.214] and in clause 8.1 of [6, TS 38.214].

Referring to FIG. 10A or 10B, in operation S8030, the first UE may receive a PSFCH based on Table 8. For example, the first UE and the second UE may determine a PSFCH resource based on Table 8, and the second UE may transmit HARQ feedback to the first UE using the a PSFCH resource.

[Table 8]

**16.3 UE procedure for reporting HARQ-ACK on sidelink**

A UE can be indicated by an SCI format scheduling a PSSCH reception to transmit a PSFCH with HARQ-ACK information in response to the PSSCH reception. The UE provides HARQ-ACK information that includes ACK or NACK, or only NACK.

A UE can be provided, by *sl-PSFCH-Period*, a number of slots in a resource pool for a period of PSFCH transmission occasion resources. If the number is zero, PSFCH transmissions from the UE in the resource pool are disabled.

A UE expects that a slot $t'^{SL}_k$ ($0 \le k < T'_{max}$) has a PSFCH transmission occasion resource if $k \bmod N^{\mathrm{PSFCH}}_{\mathrm{PSSCH}} = 0$, where $t'^{SL}_k$ is defined in [6, TS 38.214], and $T'_{max}$ is a number of slots that belong to the resource pool within 10240 msec according to [6, TS 38.214], and $N^{\mathrm{PSFCH}}_{\mathrm{PSSCH}}$ is provided by *sl-PSFCH-Period.*

A UE may be indicated by higher layers to not transmit a PSFCH in response to a PSSCH reception [11, TS 38.321].

If a UE receives a PSSCH in a resource pool and the HARQ feedback enabled/disabled indicator field in an associated SCI format 2-A or a SCI format 2-B has value 1 [5, TS 33.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH*, of the resource pool after a last slot of the PSSCH reception.

A UE is provided by *sl-PSFCH-RB-Set* a set of $M^{\mathrm{PSFCH}}_{\mathrm{PRB,set}}$ PRBs in a resource pool for PSFCH transmission in a PRB of the resource pool. For a number of $N_{\mathrm{subch}}$ sub-channels for the resource pool, provided by *sl-NumSubchannel*, and a number of PSSCH slots associated with a PSFCH slot that is less than or equal to $N^{\mathrm{PSFCH}}_{\mathrm{PSSCH}}$, the UE allocates the $\left[ \left( i + j \cdot N^{\mathrm{PSFCH}}_{\mathrm{PSSCH}} \right) \cdot M^{\mathrm{PSFCH}}_{\mathrm{subch, slot}}, \left( i + 1 + j \cdot N^{\mathrm{PSFCH}}_{\mathrm{PSSCH}} \right) \cdot M^{\mathrm{PSFCH}}_{\mathrm{subch, slot}} - 1 \right]$ PRBs from the $M^{\mathrm{PSFCH}}_{\mathrm{PRB,set}}$ PRBs to slot $i$ among the PSSCH slots associated with the PSFCH slot and sub-channel $j$, where $M^{\mathrm{PSFCH}}_{\mathrm{subch, slot}} = M^{\mathrm{PSFCH}}_{\mathrm{PRB,set}} / \left( N_{\mathrm{subch}} \cdot N^{\mathrm{PSFCH}}_{\mathrm{PSSCH}} \right)$, $0 \le i < N^{\mathrm{PSFCH}}_{\mathrm{PSSCH}}$, $0 \le j < N_{\mathrm{subch}}$, and the allocation starts in an ascending order of $i$ and continues in an ascending order of $j$. The UE expects that $M^{\mathrm{PSFCH}}_{\mathrm{PRB,set}}$ is a multiple of $N_{\mathrm{subch}} \cdot N^{\mathrm{PSFCH}}_{\mathrm{PSSCH}}$.

(continued)

The second OFDM symbol *l'* of PSFCH transmission in a slot is defined as *l'* = *sl -StartSymbol + sl -Lengt hSymbol* - 2 .

A UE determines a number of PSFCH resources available for multiplexing HARQ-ACK information in a PSFCH transmission as $R_{\mathrm{PRB,CS}}^{\mathrm{PSFCH}} = N_{\mathrm{type}}^{\mathrm{PSFCH}} \cdot M_{\mathrm{subch,slot}}^{\mathrm{PSFCH}} \cdot N_{\mathrm{CS}}^{\mathrm{PSFCH}}$ where $N_{\mathrm{CS}}^{\mathrm{PSFCH}}$ is a number of cyclic shift pairs for the resource pool provided by *sl-NumMuxCS-Pair* and, based on an indication by *sl-PSFCH-CandidateResourceType*,

- if *sl-PSFCH-CandidateResourceType* is configured as *startSubCH*, $N_{\mathrm{type}}^{\mathrm{PSFCH}} = 1$ and the $M_{\mathrm{subch,slot}}^{\mathrm{PSFCH}}$ PRBs are associated with the starting sub-channel of the corresponding PSSCH;

- if *sl-PSFCH-CandidateResourceType* is configured as *allocSubCH*, $N_{\mathrm{type}}^{\mathrm{PSFCH}} = N_{\mathrm{subch}}^{\mathrm{PSSCH}}$ and the $N_{\mathrm{subch}}^{\mathrm{PSSCH}} \cdot M_{\mathrm{subch,slot}}^{\mathrm{PSFCH}}$ PRBs are associated with the $N_{\mathrm{subch}}^{\mathrm{PSSCH}}$ sub-channels of the corresponding PSSCH.

The PSFCH resources are first indexed according to an ascending order of the PRB index, from the $N_{\mathrm{type}}^{\mathrm{PSFCH}} \cdot M_{\mathrm{subch,slot}}^{\mathrm{PSFCH}}$ PRBs, and then according to an ascending order of the cyclic shift pair index from the $N_{\mathrm{CS}}^{\mathrm{PSFCH}}$ cyclic shift pairs.

A UE determines an index of a PSFCH resource for a PSFCH transmission in response to a PSSCH reception as $(P_{\mathrm{ID}} + M_{\mathrm{ID}})\, m\, od\, R_{\mathrm{PRB,CS}}^{\mathrm{PSFCH}}$ where $P_{\mathrm{ID}}$ is a physical layer source ID provided by SCI format 2-A or 2-B [5, TS 38.212] scheduling the PSSCH reception, and $M_{\mathrm{ID}}$ is the identity of the UE receiving the PSSCH as indicated by higher layers if the UE detects a SCI format 2-A with Cast type mdicator field value of "01"; otherwise, $M_{\mathrm{ID}}$ is zero.

A UE determines a $m_0$ value, for computing a value of cyclic shift $\alpha$ [4, TS 38.211], from a cyclic shift pair index corresponding to a PSFCH resource index and from $N_{\mathrm{CS}}^{\mathrm{PSFCH}}$ using Table 16.3-1.

Referring to FIG. 10A, in operation S8040, the first UE may transmit SL HARQ feedback to the BS through the PUCCH and/or the PUSCH based on Table 9.

[Table 9]

**16.5 UE procedure for reporting HARQ-ACK on uplink**

A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in clause 9, of the cell where the UE monitors PDCCH for detection of DCI format 3_0.

For SL configured grant Type 1 or Type 2 PSSCH transmissions by a UE within a time period provided by*sl-PeriodCG* the UE generates one HARQ-ACK information bit in response to the PSFCH receptions to multiplex in a PUCCH transmission occasion that is after a last time resource, in a set of time resources.

For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0.

From a number of PSFCH reception occasions, the UE generates HARQ-ACK information to report in a PUCCH or PUSCH transmission. The UE can be indicated by a SCI format to perform one of the following and the UE constructs a HARQ-ACK codeword with HARQ-ACK information, when applicable

- for one or more PSFCH reception occasions associated with SCI format 2-A with Cast type indicator field value of "10"

- generate HARQ-ACK information with same value as a value of HARQ-ACK information the UE determines from the last PSFCH reception from the number of PSFCH reception occasions corresponding to PSSCH transmissions or, if the UE determines that a PSFCH is not received at the last PSFCH reception occasion and ACK is not received in any of previous PSFCH reception occasions, generate NACK

- for one or more PSFCH reception occasions associated with SCI format 2-A with Cast type indicator field value of "01"

- generate ACK if the UE determines ACK from at least one PSFCH reception occasion, from the number of PSFCH reception occasions corresponding to PSSCH transmissions, in PSFCH resources corresponding to every identity $M_{\mathrm{ID}}$ of the UEs that the UE expects to receive the PSSCH, as described in clause 16.3; otherwise, generate NACK

- for one or more PSFCH reception occasions associated with SCI format 2-B or SCI format 2-A with Cast type indicator field value of "11"

(continued)

- generate ACK when the UE determines absence of PSFCH reception for the last PSFCH reception occasion from the number of PSFCH reception occasions corresponding to PSSCH transmissions; otherwise, generate NACK

After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information.

The UE generates a NACK when due to prioritization, as described in clause 16.2.4, the UE does not receive PSFCH in any PSFCH reception occasion associated with a PSSCH transmission in a resource provided by a DCI format 3_0 or, for a configured grant, in a resource provided in a single period and for which the UE is provided a PUCCH resource to report HARQ-ACK information. The priority value of the NACK is same as the priority value of the PSSCH transmission.

The UE generates a NACK when, due to prioritization as described in clause 16.2.4, the UE does not transmit a PSSCH in any of the resources provided by a DCI format 3_0 or, for a configured grant, in any of the resources provided in a single period and for which the UE is provided a PUCCH resource to report HARQ-ACK information. The priority value of the NACK is same as the priority value of the PSSCH that was not transmitted due to prioritization.

The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant.

Sidelink discontinuous reception (DRX)

A MAC entity may be configured by RRC using a DRX function for controlling PDCCH monitoring activity of the UE with respect to C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, AI-RNTI, SL-RNTI, SLCS-RNTI, and SL semi-persistent scheduling V-RNTI of the MAC entity. When a DRX operation is used, the MAC entity may also monitor a PDCCH according to predetermined requirements. When DRX is configured in RRC_CONNECTED, the MAC entity may discontinuously monitor a PDCCH with respect to all activated serving cells.

The RRC may control the DRX operation by configuring the following parameters.

- drx-onDurationTimer : Duration at start of DRX cycle
- drx-SlotOffset: Delay before starting drx-onDurationTimer,
- drx-InactivityTimer: Duration after a PDCCH indicates new UL or DL transmission for a MAC entity,
- drx-RetransmissionTimerDL (per DL HARQ process except for the broadcast process): Maximum duration until DL retransmission is received,
- drx-RetransmissionTimerUL (per UL HARQ process): Maximum time until acknowledgement for UL retransmission is received,
- drx-LongCycleStartOffset: Long DRX cycle and drx-StartOffset for defining a subframe in which a Long and Short DRX cycle starts,
- drx-ShortCycle(optional): short DRX cycle,
- drx-ShortCycleTimer (optional): Time when a UE needs to comply with a short DRX cycle,
- drx-HARQ-RTT-TimerDL (per DL HARQ process except for the broadcast process): Minimum duration before DL allocation for HARQ retransmission is predicted by a MAC entity,
- drx-HARQ-RTT-TimerUL (per UL HARQ process): Minimum duration before UL HARQ retransmission acknowledgment is predicted by a MAC entity,
- drx-RetransmissionTimerSL (per HARQ process): Maximum time until acknowledgment for SL retransmission is received,
- drx-HARQ-RTT-TimerSL (per HARQ process): Minimum duration before SL retransmission acknowledgment is predicted by a MAC entity,
- ps-Wakeup (optional): Configuration for starting connected drx-onDurationTimer when DCP is monitored but is not detected.
- ps-TransmitOtherPeriodicCSI (optional): Configuration for reporting periodic CSI that is not L1-RSRP in a PUCCH during duration displayed by drx-onDurationTimer when DCP is configured but connected drx-onDurationTimer does not start,
- ps-TransmitPeriodicL1-RSRP (optional): Configuration for transmitting periodic CSI in a PUCCH during time indicated by drx-onDurationTimer when DCP is configured but connected drx-onDurationTimer does not start.

A serving cell of the MAC entity may be configured by RRC in two DRX groups having a separate DRX parameter. When the RRC does not configure a secondary DRX group, only one DRX group may be present and all serving cells may belong to one DRX group. When two DRX groups are configured, each serving cell may be uniquely allocated to each of two groups. A DRX parameter that is separately configured for each DRX group may include drx-onDurationTimer and drx-InactivityTimer. A DRX parameter common to the DRX group may be as follows.
drx-onDurationTimer, drx-InactivityTimer.

A DRX parameter common to the DRX group may be as follows.
drx-SlotOffset, drx-RetransmissionTimerDL, drx-Retrans drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

In a conventional Uu DRX operation, drx-HARQ-RTT-TimerDL, drx-HARQ-RTT-TimerUL, drx-Retransmission-TimerDL, and drx-RetransmissionTimerUL may be defined, and when UE HARQ retransmission is performed, the current mode may be transitioned to a sleep mode during an RTT timer (drx-HARQ-RTT-TimerDL or drx-HARQ-RTT-TimerUL) or may be ensured to be maintained in an activate state during a retransmission timer (drx-RetransmissionTimerDL or drx-RetransmissionTimerUL).

For details regarding SL DRX, SL DRX related contents of TS 38.321 and R2-2111419 may be referred to as prior art.

When a relay UE is in an IDLE/INACTIVE state, the relay UE may attempt connection to the BS upon receiving an RRC establishment/resume message from a remote UE. In this case, the relay UE attempting connection may transmit information including a cause value, and discussion on which value to be used as the cause value of the relay UE has been made in a standardization meeting. In this case, the cause value transferred to the BS may be used to determine an access control (whether to perform admission control or barring) by the BS.

When attempting connection to the BS, the relay UE may transmit RRCResumeRequest IE that may include information shown in Table 10 below.

[Table 10]

| RRCResumeRequest-IEs field descriptions |
|---|
| resumeCause<br>Provides the resume cause for the RRC connection resume request as provided by the upper layers or RRC. The network is not expected to reject an RRCResumeRequest due to unknown cause value being used by the UE. |
| resumeIdentity<br>UE identity to facilitate UE context retrieval at gNB. |
| resumeMAC-I<br>Authentication token to facilitate UE authentication at gNB. The 16 least significant bits of the MAC-I calculated using the AS security configuration as specified in 5.3.13.3. |

The cause value transferred to the BS during the resumeCause, the current RRC establishment, and resume may include emergency, highPriorityAccess, mt-Access, mo-Signalling, mo-Data, mo-VoiceCall, mo-VideoCall, mo-SMS, ma-Update, mps-PriorityAccess, and mcs-PriorityAccess. (refer to 3GPP TS 38.331)

The emergency may refer to an emergency, the highPriorityAccess may refer to a high priority of access, the mt-access may refer to incoming (mobile terminating) access, the mobile originating (mo)-signaling may refer to outgoing access of a UE, the mo-data may refer to access for data transmitted by the UE, the mo-VoiceCall may refer to access for voiceCall, the mo-VideoCall may refer to access for videocall, the mo-SMS may refer to access for SMS, the ma-Update may refer to access for RAN-based notification area (RNA), the mps-PriorityAccess may refer to access related to MPS that allows qualified and acknowledged user to obtain priority access to a next available radio channel according to priority over other PLMN users, and the mcs-PriorityAccess may refer to access related to a mission critical service.

With regard to the above description, whether to use the existing cause value as it is or to determine a new cause value for relay as a method of determining a cause value of the relay UE has been discussed, which is shown in Table 11 below. When the existing cause value is used as it is, the cause value received from the remote UE may be used by the relay UE.

[Table 10]

| |
|---|
| Proposal 1-1: [16/23] [Cross group] New establishment/resume cause value should be set when relay UE enter RRC _CONNECTED for relaying purpose. |
| [Cross group] RAN2 send an LS to SA2/CT1 on how to set the establishment/resume cause value when relay UE enters RRC_CONNECTED for relaying purpose. |
| [Cross group] Relay UE should be under UAC control (the same as of Remote UE) when relay UE intends to access network only for the purpose of relaying but not for its own service. |
| Option1: Existing establishment/resume cause value |
| Option2: New establishment/resume cause value |

With regard to the above description, according to the present disclosure, a method of determining the cause value when the relay UE receives the cause value from the remote UE and then attempts RRC connection will be described below.

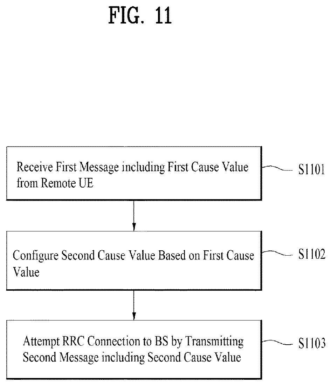

The relay UE according to the present disclosure may receive a first message including a first cause value from the remote UE (S1101 of FIG. 11). The relay UE may configure/determine a second cause value based on the first cause value (S1102). Then, the relay UE may attempt RRC connection to the BS by transmitting a second message including the second cause value.

Here, the first message may be related to trigger of attempting RRC connection, and whether configuration of the second cause value of the relay UE is dependent upon the first cause value may be determined based on a type of the first cause value. In detail, based on that the first cause value is a cause value related to an emergency, the relay UE may configure the second cause value to be the same as the first cause value. Based on that the first cause value is a cause value other than the cause value related to the emergency, the relay UE may configure the second cause value irrespective of the first cause value.

That is, among cause values received from the remote UE, some of the upper important cause values may be mapped to the cause value of the relay UE as it is, and cause values with low importance may be configured to the second cause value irrespective of the first cause value. As an example of configuration of the second cause value irrespective of the first cause value, the cause value may be grouped and may be mapped to a value with a relatively high(/low) priority in a group, which will be described below.

The cause value related to the emergency may be a cause value having an equivalent priority/urgency/importance to the cause value of the 'emergency'.

For example, when the cause value received from the remote UE by the relay UE is the emergency, the relay UE may configure the second cause value to the emergency, and when the cause value received from the remote UE by the relay UE is mt-Access, mo-Signalling, mo-Data, mo-VoiceCall, mo-VideoCall, mo-SMS, or ma-Update, the second value may be configured without being restrained to the received cause value.

In another example, the cause value of 'emergency', 'highPriorityAccess', the 'mt-Access', or 'mo-Signalling' of the remote UE may be mapped to the cause value of 'emergency', 'highPriorityAccess', 'mt-Access', or 'mo-Signalling' of the relay UE as it is, 'mo-data' or 'mo-VoiceCall' of other remote UEs may be grouped, and the cause value of the relay UE may be used as a representative value.

The relay UE may be in an RRC IDLE/INACTIVE state. The first message may trigger transition of an RRC connected state of the relay UE. That is, in the RRC IDLE/INACTIVE state, the UE may request transition of the RRC connected state to the BS for the remote UE based on a request of the remote UE.

The first message may be one of the RRC establishment or the RRC resume message. The second message may also be one of the RRC establishment or the RRC resume message. The first cause value may be included in a ResumeCause information element related to the RRC Resume request.

As configured above, the relay UE in the RRC IDLE/INACTIVE state may effectively support the remote UE via transition to an RRC connected state for the remote UE having an emergency or a situation having similar importance thereto. This may be clearly distinguished from the existing RRC establishment or the RRC resume in that the relay UE determines a cause value thereof based on a situation of the remote UE rather than a situation of the relay UE itself.

Continuously, a cause value other than the cause value related to the emergency may be included in one or more groups, and a predetermined cause value may be allocated to the one or more groups. The predetermined cause value may be used as the second cause value. That is, the cause value received from the remote UE may be grouped, and the cause value of the relay UE may also be used as a representative value of the group. That is, the cause value of the relay UE may be used using the highest or lowest value of the group as a representative value.

For example, the cause value of 'emergency', 'highPriorityAccess', 'mt-Access', or 'mo-Signalling' may be processed as one group, and the cause value of the remote UE may be mapped to the 'emergency' value with a relatively high priority in the group. That is, when the cause value of the remote UE is any one of 'emergency', 'highPriorityAccess', 'mt-Access', and 'mo-Signalling', the cause value of the relay UE may be configured to the 'emergency' value. This may reflect intention to apply a higher priority to the remote UE because the remote UE works hard for relaying using power thereof.

Alternatively, a rule may be configured for mapping with 'mo-Signalling' having a relatively low priority in a group. This is because a higher priority needs to be applied to UEs within an actual coverage during barring by applying a relatively high priority to UEs present in an actual coverage during barring and applying a relatively low priority to UEs connected to the relay UE in expanding coverage.

In the operation, that is, an operation of mapping the cause value of the remote UE to the cause value of the relay UE by the BS, the relay UE may decode an RRC establishment/resume message received from the remote UE, may (decode) the corresponding message, and may use the message as the cause value of the relay UE as it is or a method of mapping the cause value of the remove UE to the cause value of the relaying UE by the BS may be configured.

In relation to the former, since the RRC establishment/resume message received from the remote UE has no problem in terms of security, the relay UE may be capable of performing decoding. Alternatively, the relay UE may not decode the RRC message of the remote UE, but instead, the remote UE may separately inform a cause value thereof. For example, the remote UE may add the cause value thereof to an adaptation layer (header). That is, when the remote UE transmits the RRC establishment and the resume message, the cause value may also be added to the adaptation layer header. The relay UE receiving this may also extract a cause value in the adaptation layer.

The above example may be used for a cause value mapping method to be configured by the BS, and in this case, a detailed method of mapping, a combination of values to belong to a group, etc. may be modified/changed and used within the scope obvious to those skill to the art based on present disclosure described above.

In the above description, a relay UE may include at least one processor, and at least one computer memory operatively connected to the at least one processor and configured to store commands that when executed causes the at least one processor to perform operations, and the operations may include receiving a first message including a first cause value from a remote UE, configuring a second cause value based on the first cause value, and attempting RRC connection to a base station (BS) by transmitting a second message including the second cause value, and in this case, the first message may be related to trigger of attempting RRC connection, and whether configuration of the second cause value of the relay UE is dependent upon the first cause value may be determined based on a type of the first cause value.

In a processor for performing operations for a relay UE, the operations may include receiving a first message including a first cause value from a remote UE, configuring a second cause value based on the first cause value, and attempting RRC connection to a base station (BS) by transmitting a second message including the second cause value, and in this case, the first message may be related to trigger of attempting RRC connection, and whether configuration of the second cause value of the relay UE is dependent upon the first cause value may be determined based on a type of the first cause value.

In a non-volatile computer-readable storage medium for storing at least one computer program including a command for causing at least one processor to perform operations for a relay user equipment (UE) when being executed by the at least one processor, the operations includes receiving a first message including a first cause value from a remote UE, configuring a second cause value based on the first cause value, and attempting RRC connection to a base station (BS) by transmitting a second message including the second cause value, and in this case, the first message may be related to trigger of attempting RRC connection, and whether configuration of the second cause value of the relay UE is dependent upon the first cause value may be determined based on a type of the first cause value.

A sidelink relay related operating method of a BS in a wireless communication system may include receiving a second message including a second cause value and related to RRC connection attempt from a relay UE by the BS, and determining whether to perform RRC connection of the relay UE based on the second cause value by the BS, and in this case, the second cause value may be configured by the relay UE based on the first cause value included in a first message received from a remote UE, the first message may be related to trigger of attempting RRC connection, and whether configuration of the second cause value of the relay UE is dependent upon the first cause value may be determined based on a type of the first cause value.

A BS may include at least one processor, and at least one computer memory operatively connected to the at least one processor and configured to store commands that when executed causes the at least one processor to perform operations, and the operations may include receiving a second message including a second cause value and related to RRC connection attempt from a relay UE by the BS, and determining whether to perform RRC connection of the relay UE based on the second cause value by the BS, and in this case, the second cause value may be configured by the relay UE based on the first cause value included in a first message received from a remote UE, the first message may be related to trigger of attempting RRC connection, and whether configuration of the second cause value of the relay UE is dependent upon the first cause value may be determined based on a type of the first cause value.

Examples of communication systems applicable to the present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

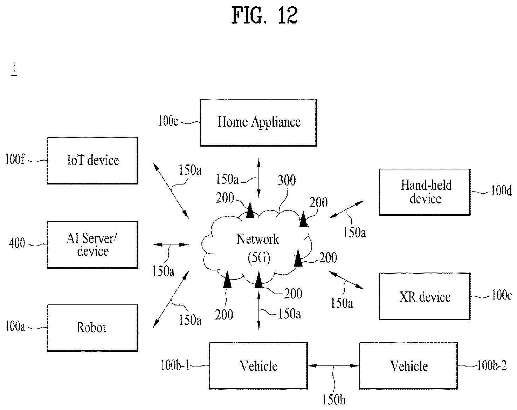

FIG. 12 illustrates a communication system 1 applied to the present disclosure.

Referring to FIG. 12, a communication system 1 applied to the present disclosure includes wireless devices, BSs, and a network. Herein, the wireless devices represent devices performing communication using RAT (e.g., 5G NR or LTE) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 400. For example, the vehicles may include a vehicle having a wireless communication function, an autonomous driving vehicle, and a vehicle capable of performing communication between vehicles. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. V2V/V2X communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as UL/DL communication 150a, sidelink communication 150b (or, D2D communication), or inter BS communication (e.g. relay, integrated access backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices applicable to the present disclosure

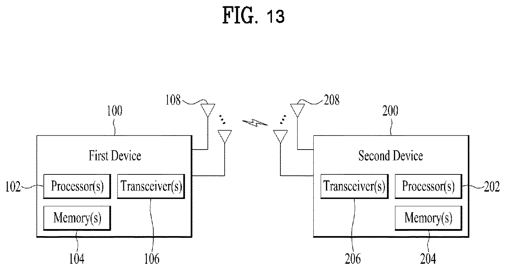

FIG. 13 illustrates wireless devices applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more service data unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of a vehicle or an autonomous driving vehicle applicable to the present disclosure

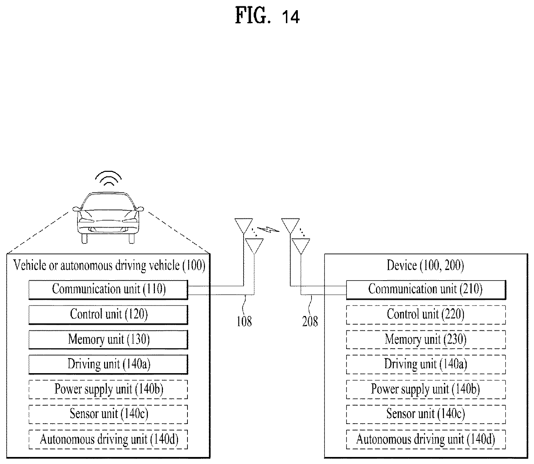

FIG. 14 illustrates a vehicle or an autonomous driving vehicle applied to the present disclosure. The vehicle or autonomous driving vehicle may be implemented by a mobile robot, a car, a train, a manned/unmanned aerial vehicle (AV), a ship, etc.

Referring to FIG. 14, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 43, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Examples of a vehicle and AR/VR applicable to the present disclosure

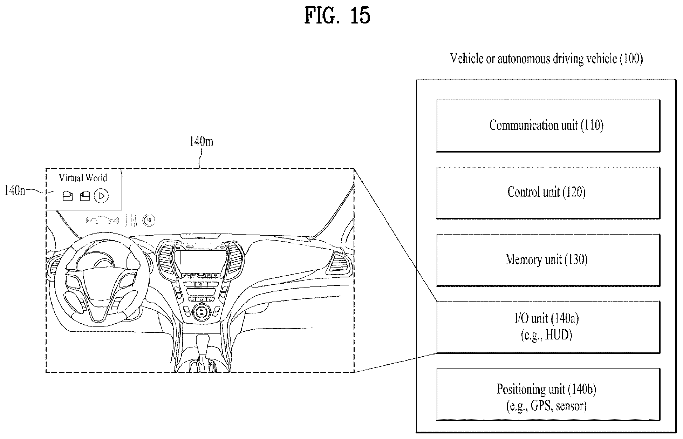

FIG. 15 illustrates a vehicle applied to the present disclosure. The vehicle may be implemented as a transport means, an aerial vehicle, a ship, etc.

Referring to FIG. 15, a vehicle 100 may include a communication unit 110, a control unit 120, a memory unit 130, an I/O unit 140a, and a positioning unit 140b. Herein, the blocks 110 to 130/140a and 140b correspond to blocks 110 to 130/140 of FIG. 43.

The communication unit 110 may transmit and receive signals (e.g., data and control signals) to and from external devices such as other vehicles or BSs. The control unit 120 may perform various operations by controlling constituent elements of the vehicle 100. The memory unit 130 may store data/parameters/programs/code/commands for supporting various functions of the vehicle 100. The I/O unit 140a may output an AR/VR object based on information within the memory unit 130. The I/O unit 140a may include an HUD. The positioning unit 140b may acquire information about the position of the vehicle 100. The position information may include information about an absolute position of the vehicle 100, information about the position of the vehicle 100 within a traveling lane, acceleration information, and information about the position of the vehicle 100 from a neighboring vehicle. The positioning unit 140b may include a GPS and various sensors.

As an example, the communication unit 110 of the vehicle 100 may receive map information and traffic information from an external server and store the received information in the memory unit 130. The positioning unit 140b may obtain the vehicle position information through the GPS and various sensors and store the obtained information in the memory unit 130. The control unit 120 may generate a virtual object based on the map information, traffic information, and vehicle position information and the I/O unit 140a may display the generated virtual object in a window in the vehicle (1410 and 1420). The control unit 120 may determine whether the vehicle 100 normally drives within a traveling lane, based on the vehicle position information. If the vehicle 100 abnormally exits from the traveling lane, the control unit 120 may display a warning on the window in the vehicle through the I/O unit 140a. In addition, the control unit 120 may broadcast a warning message regarding driving abnormity to neighboring vehicles through the communication unit 110. According to situation, the control unit 120 may transmit the vehicle position information and the information about driving/vehicle abnormality to related organizations.

Examples of an XR device applicable to the present disclosure

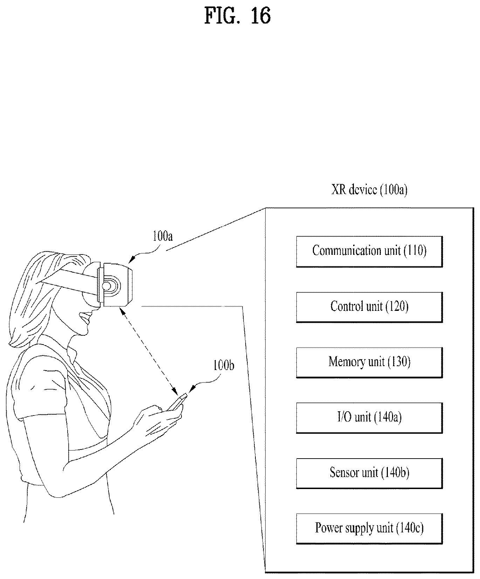

FIG. 16 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 16, an XR device 100a may include a communication unit 110, a control unit 120, a memory unit 130, an I/O unit 140a, a sensor unit 140b, and a power supply unit 140c. Herein, the blocks 110 to 130/140a to 140c correspond to the blocks 110 to 130/140 of FIG. 43, respectively.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

Examples of a robot applicable to the present disclosure

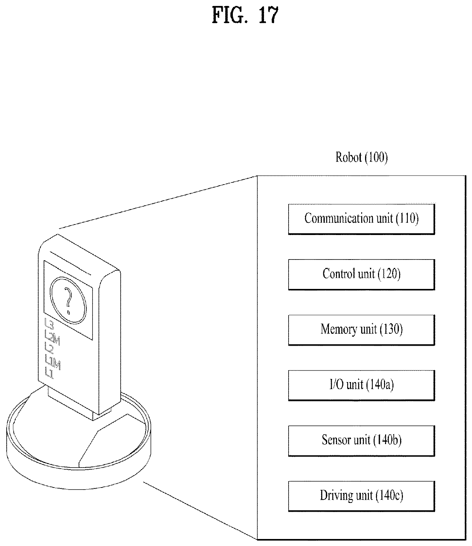

FIG. 17 illustrates a robot applied to the present disclosure. The robot may be categorized into an industrial robot, a medical robot, a household robot, a military robot, etc., according to a used purpose or field.

Referring to FIG. 17, a robot 100 may include a communication unit 110, a control unit 120, a memory unit 130, an I/O unit 140a, a sensor unit 140b, and a driving unit 140c. Herein, the blocks 110 to 130/140a to 140c correspond to the blocks 110 to 130/140 of FIG. 13, respectively.

The communication unit 110 may transmit and receive signals (e.g., driving information and control signals) to and from external devices such as other wireless devices, other robots, or control servers. The control unit 120 may perform various operations by controlling constituent elements of the robot 100. The memory unit 130 may store data/parameters/programs/code/commands for supporting various functions of the robot 100. The I/O unit 140a may obtain information from the exterior of the robot 100 and output information to the exterior of the robot 100. The I/O unit 140a may include a camera, a microphone, a user input unit, a display unit, a speaker, and/or a haptic module. The sensor unit 140b may obtain internal information of the robot 100, surrounding environment information, user information, etc. The sensor unit 140b may include a proximity sensor, an illumination sensor, an acceleration sensor, a magnetic sensor, a gyro sensor, an inertial sensor, an IR sensor, a fingerprint recognition sensor, an ultrasonic sensor, a light sensor, a microphone, a radar, etc. The driving unit 140c may perform various physical operations such as movement of robot joints. In addition, the driving unit 140c may cause the robot 100 to travel on the road or to fly. The driving unit 140c may include an actuator, a motor, a wheel, a brake, a propeller, etc.

Example of AI device to which the present disclosure is applied.

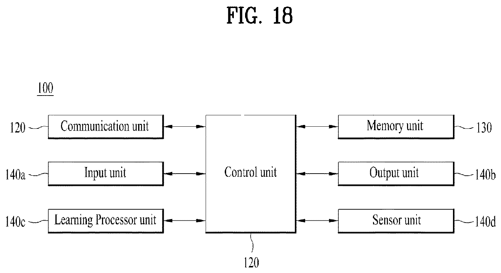

FIG. 18 illustrates an AI device applied to the present disclosure. The AI device may be implemented by a fixed device or a mobile device, such as a TV, a projector, a smartphone, a PC, a notebook, a digital broadcast terminal, a tablet PC, a wearable device, a Set Top Box (STB), a radio, a washing machine, a refrigerator, a digital signage, a robot, a vehicle, etc.

Referring to FIG. 18, an AI device 100 may include a communication unit 110, a control unit 120, a memory unit 130, an I/O unit 140a/140b, a learning processor unit 140c, and a sensor unit 140d. The blocks 110 to 130/140a to 140d correspond to blocks 110 to 130/140 of FIG. 13, respectively.

The communication unit 110 may transmit and receive wired/radio signals (e.g., sensor information, user input, learning models, or control signals) to and from external devices such as other AI devices (e.g., 100x, 200, or 400 of FIG. 12) or an AI server (e.g., 400 of FIG. 12) using wired/wireless communication technology. To this end, the communication unit 110 may transmit information within the memory unit 130 to an external device and transmit a signal received from the external device to the memory unit 130.

The control unit 120 may determine at least one feasible operation of the AI device 100, based on information which is determined or generated using a data analysis algorithm or a machine learning algorithm. The control unit 120 may perform an operation determined by controlling constituent elements of the AI device 100. For example, the control unit 120 may request, search, receive, or use data of the learning processor unit 140c or the memory unit 130 and control the constituent elements of the AI device 100 to perform a predicted operation or an operation determined to be preferred among at least one feasible operation. The control unit 120 may collect history information including the operation contents of the AI device 100 and operation feedback by a user and store the collected information in the memory unit 130 or the learning processor unit 140c or transmit the collected information to an external device such as an AI server (400 of FIG. 12). The collected history information may be used to update a learning model.

The memory unit 130 may store data for supporting various functions of the AI device 100. For example, the memory unit 130 may store data obtained from the input unit 140a, data obtained from the communication unit 110, output data of the learning processor unit 140c, and data obtained from the sensor unit 140. The memory unit 130 may store control information and/or software code needed to operate/drive the control unit 120.

The input unit 140a may acquire various types of data from the exterior of the AI device 100. For example, the input unit 140a may acquire learning data for model learning, and input data to which the learning model is to be applied. The input unit 140a may include a camera, a microphone, and/or a user input unit. The output unit 140b may generate output related to a visual, auditory, or tactile sense. The output unit 140b may include a display unit, a speaker, and/or a haptic module. The sensing unit 140 may obtain at least one of internal information of the AI device 100, surrounding environment information of the AI device 100, and user information, using various sensors. The sensor unit 140 may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar.

The learning processor unit 140c may learn a model consisting of artificial neural networks, using learning data. The learning processor unit 140c may perform AI processing together with the learning processor unit of the AI server (400 of FIG. 12). The learning processor unit 140c may process information received from an external device through the communication unit 110 and/or information stored in the memory unit 130. In addition, an output value of the learning processor unit 140c may be transmitted to the external device through the communication unit 110 and may be stored in the memory unit 130.

The above-described embodiments of the present disclosure are applicable to various mobile communication systems.

## Claims

1. A sidelink relay related operating method of a relay user equipment, UE, in a wireless communication system, the method comprising:

   receiving, by the relay UE, a first message including a first cause value, among a plurality of first cause values, from a remote UE;
   configuring, by the relay UE, a second cause value based on the first cause value; and
   attempting, by the relay UE, a connection to a base station, BS, by transmitting a second message including the second cause value,
   wherein the second cause value is the same as the received first cause value based on the received first cause value being one of a specific subset of at least one first cause values among the plurality of first cause values,
   wherein the number of first cause values in the specific subset is less than the plurality of first cause values, and
   wherein, based on that the received first cause value has lower priority than predetermined priority, the received first cause value is included in a cause value group and the second cause value is configured as a representative cause value of the cause value group.

2. The method of claim 1, wherein the received first cause value is related to an emergency and belongs to the specific subset of first cause values.

3. The method of claim 1, wherein based on the first cause value not being related to an emergency, the relay UE configures the second cause value irrespective of the first cause value.

4. The method of claim 3, wherein based on the first cause value not being related to an emergency, the relay UE configures the second cause value to be a predetermined cause value.

5. The method of claim 1, wherein the relay UE is in an RRC IDLE/INACTIVE state.

6. The method of claim 1, wherein the first message triggers transition to an RRC connected state of the relay UE.

7. The method of claim 6, wherein the first message is one of RRC establishment or an RRC resume message.

8. The method of claim 1, wherein the first cause value is included in a ResumeCause information element related to an RRC Resume request.

9. A relay user equipment, UE, in a wireless communication system, the relay UE comprising:

   at least one processor; and
   at least one computer memory operatively connected to the at least one processor and configured to store commands that when executed causes the at least one processor to perform operations,
   wherein the operations includes:

   receiving a first message including a first cause value, among a plurality of first cause values, from a remote UE;
   configuring a second cause value based on the received first cause value;
   attempting a connection to a base station, BS, by transmitting a second message including the second cause value,
   wherein the second cause value is the same as the received first cause value based on the received first cause value being one of a specific subset of at least one first cause values among the plurality of first cause values, wherein the number of first cause values in the specific subset is less than the plurality of first cause values, and

wherein, based on that the received first cause value has lower priority than predetermined priority, the received first cause value is included in a cause value group and the second cause value is configured as a representative cause value of the cause value group.

10. The relay UE of claim 9, further configured to perform any one of the methods of claims 2 to 8.

11. A processor for performing operations for a relay user equipment, UE, the operations comprising:

receiving a first message including a first cause value, among a plurality of first cause values, from a remote UE; configuring a second cause value based on the received first cause value; and attempting a connection to a base station, BS, by transmitting a second message including the second cause value, wherein the second cause value is the same as the received first cause value based on the received first cause value being one of a specific subset of at least one first cause values among the plurality of first cause values, wherein the number of first cause values in the specific subset is less than the plurality of first cause values, and wherein, based on that the received first cause value has lower priority than predetermined priority, the received first cause value is included in a cause value group and the second cause value is configured as a representative cause value of the cause value group.

12. A computer program or a device readable storage medium or carrier containing a computer program, the computer program comprising instructions which when executed on a processor cause the processor to perform any one of the methods of claims 1 to 8.

13. A sidelink relay related operating method of a base station, BS, in a wireless communication system, the method comprising:

receiving a second message including a second cause value from a relay UE; and determining whether to perform a connection of the relay UE based on the second cause value, wherein the second cause value is configured by the relay UE based on a first cause value included in a first message received by the relay UE from a remote UE; wherein the second cause value is the same as the first cause value based on the first cause value being one of a specific subset of at least one first cause value among a plurality of first cause values, wherein the number of first cause values in the specific subset is less than the plurality of first cause values, and wherein, based on that the received first cause value has a lower priority than a predetermined priority, the received first cause value is included in a cause value group and the second cause value is configured as a representative cause value of the cause value group.

14. The method of claim 13, further configured to perform any one of the methods of claims 2 to 8.

15. A base station, BS, in a wireless communication system, the BS comprising:

at least one processor; and at least one computer memory operatively connected to the at least one processor and configured to store commands that when executed causes the at least one processor to perform operations, wherein the operations includes:

receiving a second message including a second cause value from a relay UE; and determining whether to perform a connection of the relay UE based on the second cause value, wherein the second cause value is configured by the relay UE based on the first cause value included in a first message received from a remote UE, wherein the second cause value is the same as the first cause value based on the first cause value being one of a specific subset of at least one first cause value among a plurality of first cause values, wherein the number of first cause values in the specific subset is less than the plurality of first cause values, and wherein, based on that the received first cause value has a lower priority than a predetermined priority, the received first cause value is included in a cause value group and the second cause value is configured as a representative cause value of the cause value group.

16. The BS of claim 15, further configured to perform any one of the methods of claims 2 to 8.

**Patentansprüche**

1. Sidelink-Relais-bezogenes Betriebsverfahren eines Relais-Benutzergeräts, UE, in einem Drahtloskommunikationssystem, wobei das Verfahren umfasst:

Empfangen einer ersten Nachricht einschließlich eines ersten Ursachenwerts aus einer Mehrzahl erster Ursachenwerte von einem entfernten UE durch das Relais-UE;
Konfigurieren eines zweiten Ursachenwerts durch das Relais-UE basierend auf dem ersten Ursachenwert; und
Versuchen einer Verbindung mit einer Basisstation, BS, durch das Relais-UE durch Senden einer zweiten Nachricht einschließlich des zweiten Ursachenwerts,
wobei der zweite Ursachenwert derselbe ist wie der empfangene erste Ursachenwert, basierend darauf, dass der empfangene erste Ursachenwert einer aus einer bestimmten Teilmenge von mindestens einem ersten Ursachenwert aus der Mehrzahl erster Ursachenwerte ist, wobei die Anzahl erster Ursachenwerte in der bestimmten Teilmenge kleiner ist als die Mehrzahl erster Ursachenwerte, und
wobei basierend darauf, dass der empfangene erste Ursachenwert eine niedrigere Priorität als eine vorbestimmte Priorität hat, der empfangene erste Ursachenwert in eine Ursachenwertgruppe aufgenommen wird und der zweite Ursachenwert als ein repräsentativer Ursachenwert der Ursachenwertgruppe konfiguriert wird.

2. Verfahren nach Anspruch 1, wobei der empfangene erste Ursachenwert sich auf einen Notfall bezieht und zu der bestimmten Teilmenge der ersten Ursachenwerte gehört.

3. Verfahren nach Anspruch 1, wobei das Relais-UE basierend darauf, dass der erste Ursachenwert sich nicht auf einen Notfall bezieht, den zweiten Ursachenwert unabhängig vom ersten Ursachenwert konfiguriert.

4. Verfahren nach Anspruch 3, wobei das Relais-UE basierend darauf, dass der erste Ursachenwert sich nicht auf einen Notfall bezieht, den zweiten Ursachenwert auf einen vorbestimmten Ursachenwert konfiguriert.

5. Verfahren nach Anspruch 1, wobei sich das Relais-UE in einem RRC-IDLE/INACTIVE-Zustand befindet.

6. Verfahren nach Anspruch 1, wobei die erste Nachricht einen Übergang in einen RRC-Verbindungszustand des Relais-UE auslöst.

7. Verfahren nach Anspruch 6, wobei die erste Nachricht eine von einer RRC-Einrichtungsnachricht oder einer RRC-Wiederaufnahmenachricht ist.

8. Verfahren nach Anspruch 1, wobei der erste Ursachenwert in einem ResumeCause-Informationselement mit Bezug auf eine RRC-Wiederaufnahmeanforderung enthalten ist.

9. Relais-Benutzergerät, UE, in einem Drahtloskommunikationssystem, wobei das Relais-UE Folgendes umfasst:

mindestens einen Prozessor; und
mindestens einen Computerspeicher, der betriebsmäßig mit dem mindestens einen Prozessor verbunden und zum Speichern von Befehlen eingerichtet ist, die bei Ausführung den mindestens einen Prozessor zum Ausführen von Vorgängen veranlassen,
wobei die Vorgänge Folgendes umfassen:

Empfangen einer ersten Nachricht einschließlich eines ersten Ursachenwerts aus einer Mehrzahl erster Ursachenwerte von einem entfernten UE;
Konfigurieren eines zweiten Ursachenwerts basierend auf dem empfangenen ersten Ursachenwert; und
Versuchen einer Verbindung mit einer Basisstation, BS, durch Senden einer zweiten Nachricht einschließlich des zweiten Ursachenwerts,
wobei der zweite Ursachenwert derselbe ist wie der empfangene erste Ursachenwert, basierend darauf, dass der empfangene erste Ursachenwert einer aus einer bestimmten Teilmenge von mindestens einem ersten Ursachenwert aus der Mehrzahl erster Ursachenwerte ist, wobei die Anzahl erster Ursachenwerte in der bestimmten Teilmenge kleiner ist als die Mehrzahl erster Ursachenwerte, und

wobei basierend darauf, dass der empfangene erste Ursachenwert eine niedrigere Priorität als eine vorbestimmte Priorität hat, der empfangene erste Ursachenwert in eine Ursachenwertgruppe aufgenommen wird und der zweite Ursachenwert als ein repräsentativer Ursachenwert der Ursachenwertgruppe konfiguriert wird.

10. Relais-UE nach Anspruch 9, das weiterhin zum Ausführen eines der Verfahren der Ansprüche 2 bis 8 eingerichtet ist.

11. Prozessor zum Ausführen von Vorgängen für ein Relais-Benutzergerät, UE, wobei die Vorgänge Folgendes umfassen:

Empfangen einer ersten Nachricht einschließlich eines ersten Ursachenwerts aus einer Mehrzahl erster Ursachenwerte von einem entfernten UE;
Konfigurieren eines zweiten Ursachenwerts basierend auf dem ersten Ursachenwert; und
Versuchen einer Verbindung mit einer Basisstation, BS, durch Senden einer zweiten Nachricht einschließlich des zweiten Ursachenwerts,
wobei der zweite Ursachenwert derselbe ist wie der empfangene erste Ursachenwert, basierend darauf, dass der empfangene erste Ursachenwert einer aus einer bestimmten Teilmenge von mindestens einem ersten Ursachenwert aus der Mehrzahl erster Ursachenwerte ist, wobei die Anzahl erster Ursachenwerte in der bestimmten Teilmenge kleiner ist als die Mehrzahl erster Ursachenwerte, und
wobei basierend darauf, dass der empfangene erste Ursachenwert eine niedrigere Priorität als eine vorbestimmte Priorität hat, der empfangene erste Ursachenwert in eine Ursachenwertgruppe aufgenommen wird und der zweite Ursachenwert als ein repräsentativer Ursachenwert der Ursachenwertgruppe konfiguriert wird.

12. Computerprogramm oder ein gerätelesbares Speichermedium oder ein Träger, der ein Computerprogramm enthält, wobei das Computerprogramm Anweisungen umfasst, die, wenn sie auf einem Prozessor ausgeführt werden, den Prozessor veranlassen, eines der Verfahren der Ansprüche 1 bis 8 auszuführen.

13. Sidelink-Relais-bezogenes Betriebsverfahren einer Basisstation, BS, in einem Drahtloskommunikationssystem, wobei das Verfahren umfasst:

Empfangen einer zweiten Nachricht einschließlich eines zweiten Ursachenwerts von einem Relais-UE; und
Bestimmen, ob eine Verbindung des Relais-UE hergestellt werden soll, basierend auf dem zweiten Ursachenwert,
wobei der zweite Ursachenwert durch das Relais-UE basierend auf einem ersten Ursachenwert konfiguriert wird, der in einer ersten Nachricht enthalten ist, die das Relais-UE von einem entfernten UE empfängt;
wobei der zweite Ursachenwert derselbe ist wie der erste Ursachenwert, basierend darauf, dass der erste Ursachenwert einer aus einer bestimmten Teilmenge von mindestens einem ersten Ursachenwert aus einer Mehrzahl erster Ursachenwerte ist, wobei die Anzahl erster Ursachenwerte in der bestimmten Teilmenge kleiner ist als die Mehrzahl erster Ursachenwerte, und
wobei basierend darauf, dass der empfangene erste Ursachenwert eine niedrigere Priorität als eine vorbestimmte Priorität hat, der empfangene erste Ursachenwert in eine Ursachenwertgruppe aufgenommen wird und der zweite Ursachenwert als ein repräsentativer Ursachenwert der Ursachenwertgruppe konfiguriert wird.

14. Verfahren nach Anspruch 13, das ferner zum Ausführen eines der Verfahren der Ansprüche 2 bis 8 eingerichtet ist.

15. Basisstation, BS, in einem Drahtloskommunikationssystem, wobei die BS Folgendes umfasst:

mindestens einen Prozessor; und
mindestens einen Computerspeicher, der betriebsmäßig mit dem mindestens einen Prozessor verbunden und zum Speichern von Befehlen eingerichtet ist, die bei Ausführung den mindestens einen Prozessor zum Ausführen von Vorgängen veranlassen,
wobei die Vorgänge Folgendes umfassen:

Empfangen einer zweiten Nachricht einschließlich eines zweiten Ursachenwerts von einem Relais-UE; und
Bestimmen, ob eine Verbindung des Relais-UE basierend auf dem zweiten Ursachenwert hergestellt werden soll,

wobei der zweite Ursachenwert durch das Relais-UE basierend auf dem ersten Ursachenwert konfiguriert wird, der in einer ersten Nachricht enthalten ist, die von einem entfernten UE empfangen wurde,

wobei der zweite Ursachenwert derselbe ist wie der erste Ursachenwert, basierend darauf, dass der erste Ursachenwert einer aus einer bestimmten Teilmenge von mindestens einem ersten Ursachenwert aus einer Mehrzahl erster Ursachenwerte ist, wobei die Anzahl erster Ursachenwerte in der bestimmten Teilmenge kleiner ist als die Mehrzahl erster Ursachenwerte, und

wobei basierend darauf, dass der empfangene erste Ursachenwert eine niedrigere Priorität als eine vorbestimmte Priorität hat, der empfangene erste Ursachenwert in eine Ursachenwertgruppe aufgenommen wird und der zweite Ursachenwert als ein repräsentativer Ursachenwert der Ursachenwertgruppe konfiguriert wird.

16. BS nach Anspruch 15, die weiterhin zum Ausführen eines der Verfahren der Ansprüche 2 bis 8 eingerichtet ist.

**Revendications**

1. Procédé de fonctionnement d'un équipement utilisateur relais, UE, dans un système de communication sans fil, lié à un relais de liaison latérale, le procédé comprenant:

la réception, par l'UE relais, d'un premier message comprenant une première valeur de cause, parmi une pluralité de premières valeurs de cause, en provenance d'un UE distant;

la configuration, par l'UE relais, d'une deuxième valeur de cause en fonction de la première valeur de cause; et

l'essai d'établissement, par l'UE relais, d'une connexion avec une station de base, BS, en transmettant un deuxième message comprenant la deuxième valeur de cause,

dans lequel la deuxième valeur de cause est identique à la première valeur de cause reçue si la première valeur de cause reçue fait partie d'un sous-ensemble spécifique d'au moins une première valeur de cause parmi la pluralité de premières valeurs de cause, dans lequel le nombre de premières valeurs de cause dans le sous-ensemble spécifique est inférieur à la pluralité de premières valeurs de cause,

et dans lequel, si la première valeur de cause reçue a une priorité inférieure à la priorité prédéterminée, la première valeur de cause reçue est incluse dans un groupe de valeurs de cause et la deuxième valeur de cause est configurée comme une valeur de cause représentative du groupe de valeurs de cause.

2. Procédé selon la revendication 1, dans lequel la première valeur de cause reçue est liée à une situation d'urgence et appartient au sous-ensemble spécifique de premières valeurs de cause.

3. Procédé selon la revendication 1, dans lequel, la première valeur de cause n'étant pas liée à une situation d'urgence, l'UE relais configure la deuxième valeur de cause indépendamment de la première valeur de cause.

4. Procédé selon la revendication 3, dans lequel, la première valeur de cause n'étant pas liée à une situation d'urgence, l'UE relais configure la deuxième valeur de cause pour qu'elle soit une valeur de cause prédéterminée.

5. Procédé selon la revendication 1, dans lequel l'UE relais est dans un état RRC VEILLE/INACTIVE.

6. Procédé selon la revendication 1, dans lequel le premier message déclenche le passage à un état de connexion RRC de l'UE relais.

7. Procédé selon la revendication 6, dans lequel le premier message est l'un parmi un message d'établissement de RRC ou un message de reprise de RRC.

8. Procédé selon la revendication 1, dans lequel la première valeur de cause est incluse dans un élément d'information ResumeCause lié à une demande de reprise de RRC.

9. Équipement d'utilisateur relais, UE, dans un système de communication sans fil, l'UE relais comprenant:

au moins un processeur; et

au moins une mémoire informatique connectée fonctionnellement à l'au moins un processeur et configurée pour stocker des instructions qui, lorsqu'elles sont exécutées, amènent l'au moins un processeur à effectuer des opérations,

dans lequel les opérations consistent à:

recevoir un premier message comprenant une première valeur de cause, parmi une pluralité de premières valeurs de cause, en provenance d'un UE distant;

configurer une deuxième valeur de cause sur la base de la première valeur de cause reçue;

tenter d'établir une connexion avec une station de base, BS, en transmettant un deuxième message comprenant la deuxième valeur de cause,

dans lequel la deuxième valeur de cause est identique à la première valeur de cause reçue si la première valeur de cause reçue qui fait partie d'un sous-ensemble spécifique d'au moins une première valeur de cause parmi la pluralité de premières valeurs de cause, dans lequel le nombre de premières valeurs de cause dans le sous-ensemble spécifique est inférieur à la pluralité de premières valeurs de cause, et

dans lequel, si la première valeur de cause reçue a une priorité inférieure à la priorité prédéterminée, la première valeur de cause reçue est incluse dans un groupe de valeurs de cause et la deuxième valeur de cause est configurée comme une valeur de cause représentative du groupe de valeurs de cause.

10. UE relais selon la revendication 9, configuré en outre pour exécuter l'un quelconque des procédés selon les revendications 2 à 8.

11. Processeur de réalisation des opérations pour un équipement utilisateur relais, UE, les opérations consistant à:

recevoir un premier message comprenant une première valeur de cause, parmi une pluralité de premières valeurs de cause, en provenance d'un UE distant;

configurer une deuxième valeur de cause sur la base de la première valeur de cause reçue; et

tenter d'établir une connexion avec une station de base, BS, en transmettant un deuxième message comprenant la deuxième valeur de cause,

dans lequel la deuxième valeur de cause est identique à la première valeur de cause reçue si la première valeur de cause reçue fait partie d'un sous-ensemble spécifique d'au moins une première valeur de cause parmi la pluralité de premières valeurs de cause, dans lequel le nombre de premières valeurs de cause dans le sous-ensemble spécifique est inférieur à la pluralité de premières valeurs de cause, et

dans lequel, si la première valeur de cause reçue a une priorité inférieure à la priorité prédéterminée, la première valeur de cause reçue est incluse dans un groupe de valeurs de cause et la deuxième valeur de cause est configurée comme une valeur de cause représentative du groupe de valeurs de cause.

12. Programme informatique ou support d'enregistrement lisible par un dispositif ou support contenant un programme d'ordinateur, le programme informatique comprenant des instructions qui, lorsqu'elles sont exécutées sur un processeur, amènent le processeur à exécuter l'un quelconque des procédés selon les revendications 1 à 8.

13. Procédé de fonctionnement d'une station de base, BS, dans un système de communication sans fil, lié à un relais de liaison latérale, le procédé comprenant:

la réception d'un deuxième message comprenant une deuxième valeur de cause, en provenance d'un UE relais; et

le fait de déterminer s'il convient d'établir une connexion de l'UE relais sur la base de la deuxième valeur de cause, dans lequel la deuxième valeur de cause est configurée par l'UE relais en fonction d'une première valeur de cause incluse dans un premier message reçu par l'UE relais en provenance d'un UE distant;

dans lequel la deuxième valeur de cause est identique à la première valeur de cause si la première valeur de cause fait partie d'un sous-ensemble spécifique d'au moins une première valeur de cause parmi une pluralité de premières valeurs de cause, le nombre de premières valeurs de cause dans le sous-ensemble spécifique étant inférieur à la pluralité de première valeurs de cause, et

dans lequel, si la première valeur de cause reçue a une priorité inférieure à une priorité prédéterminée, la première valeur de cause reçue est incluse dans un groupe de valeurs de cause et la deuxième valeur de cause est configurée comme une valeur de cause représentative du groupe de valeurs de cause.

14. Procédé selon la revendication 13, configuré en outre pour exécuter l'un quelconque des procédés selon les revendications 2 à 8.

15. Station de base, BS, dans un système de communication sans fil, la BS comprenant:

au moins un processeur; et

au moins une mémoire informatique connectée fonctionnellement à l'au moins un processeur et configurée pour stocker des instructions qui, lorsqu'elles sont exécutées, amènent l'au moins un processeur à effectuer des opérations,

dans lequel les opérations consistent à:

recevoir un deuxième message comprenant une deuxième valeur de cause en provenance d'un UE relais ; et

déterminer s'il faut effectuer une connexion de l'UE relais sur la base de la deuxième valeur de cause,

dans lequel la deuxième valeur de cause est configurée par l'UE relais sur la base de la première valeur de cause incluse dans un premier message reçu en provenance d'un UE distant,

dans lequel la deuxième valeur de cause est identique à la première valeur de cause si la première valeur de cause fait partie d'un sous-ensemble spécifique d'au moins une première valeur de cause parmi une pluralité de premières valeurs de cause, dans lequel le nombre de premières valeurs de cause dans le sous ensemble spécifique est inférieur à la pluralité des premières valeurs de cause, et

dans lequel, si la première valeur de cause a une priorité inférieure à une priorité prédéterminée, la première valeur de cause reçue est incluse dans un groupe de valeurs de cause et la deuxième valeur de cause est configurée comme une valeur de cause représentative du groupe de valeurs de cause.

16. BS selon la revendication 15, configuré en outre pour exécuter l'un quelconque procédés selon les revendications 2 à 8.

FIG. 1

# FIG. 2

# FIG. 3

(a)

(b)

# FIG. 4

# FIG. 5

gNB
- Inter-Cell RRM
- RB Control
- Connection Mobility Control
- Radio Access Control
- Measurement Configuration and Provisioning
- Dynamic Resource Allocation (Scheduler)

NG-RAN

AMF
- NAS Security
- Idle-State Mobility Processing

SMF
- UE IP Address Allocation
- PDU Session Control

UPF
- Mobility Anchoring
- PDU Processing

5GC

Internet

# FIG. 6

| ... | One Frame (10ms) | ... |

| ... | Half-Frame (5ms) | Half-Frame (5ms) | ... |

| ... | Subframe 0 (1ms) | ... | Subframe 4 (1ms) | Subframe 5 (1ms) | ... | Subframe 9 (1ms) | ... |

Subframe (1ms)

| 15KHz | Slot 0 (14symbols) |
| --- | --- |

1ms

| 30KHz | Slot 0 (14symbols) | Slot 1 |
| --- | --- | --- |

500us

| 60KHz | Slot 0 (14symbols) | Slot 1 | Slot 2 | Slot 3 |
| --- | --- | --- | --- | --- |

250us

| 120KHz | Slot 0 (14symbols) | Slot 1 | Slot 2 | Slot 3 | Slot 4 | Slot 5 | Slot 6 | Slot 7 |
| --- | --- | --- | --- | --- | --- | --- | --- | --- |

125us

# FIG. 7

## FIG. 8

PU5-U

(a)

PU5-C

(b)

# FIG. 9

PU5-U

(a)

PU5-U

(b)

# FIG. 10

(a)

(b)

# FIG. 11

Receive First Message including First Cause Value from Remote UE ~— S1101

Configure Second Cause Value Based on First Cause Value ~— S1102

Attempt RRC Connection to BS by Transmitting Second Message including Second Cause Value ~— S1103

## FIG. 12

FIG. 13

# FIG. 14

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

# FIG. 15

Vehicle or autonomous driving vehicle (100)

- Communication unit (110)
- Control unit (120)
- Memory unit (130)
- I/O unit (140a) (e.g., HUD)
- Positioning unit (140b) (e.g., GPS, sensor)

140m

140n

Virtual World

## FIG. 16

XR device (100a)

Communication unit (110)

Control unit (120)

Memory unit (130)

I/O unit (140a)

Sensor unit (140b)

Power supply unit (140c)

100a

100b

FIG. 17

Robot (100)

Communication unit (110)

Control unit (120)

Memory unit (130)

I/O unit (140a)

Sensor unit (140b)

Driving unit (140c)

# FIG. 18

<u>100</u>

120 —| Communication unit | ←→ | Control unit | ←→ | Memory unit |— 130

140a —| Input unit | ←→ | | ←→ | Output unit |—140b

140c —| Learning Processor unit | ←→ | | ←→ | Sensor unit |—140d

120

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020059292 A